# EUROPEAN PATENT SPECIFICATION

(11) **EP 3 867 491 B1**
(45) Date of publication and mention of the grant of the patent: **29.10.2025**
(21) Application number: 19905873.6
(22) Date of filing: 19.12.2019
(51) Int. Cl.: E21B 33/128, E21B 23/06, E21B 33/12, F16L 1/26, F16L 55/18, F16L 55/168

(54) **SUBSEA SLIP-ON PIPELINE REPAIR CONNECTOR WITH GRAPHITE PACKING**
AUFSTECKBARER UNTERWASSER-PIPELINE-REPARATURVERBINDER MIT GRAPHITPACKUNG
RACCORD À ASSEMBLAGE COULISSANT POUR RÉPARATION DE PIPELINES SOUS-MARINS À GARNITURE D'ÉTANCHÉITÉ EN GRAPHITE

(30) Priority: 19.12.2018 US 201862782121 P
(43) Date of publication of application: 25.08.2021
(73) Proprietor: Oceaneering International, Inc., Houston, TX 77086 (US)
(72) Inventor: MATTHEW, Charles, Houston, Texas 77004 (US); CHEN, Cheng, Houston, Texas 77041 (US); PRASHANT, Kandar, Cypress, Texas 77429 (US)
(74) Representative: Potter, Julian Mark
(86) International application number: PCT/US2019/067626
(87) International publication number: WO 2020/139716

(56) References cited:
- WO-A1-03/102360
- WO-A1-2014/152904
- US-A- 3 744 822
- US-A- 5 433 482
- US-A1- 2016 145 965
- US-A1- 2016 298 416
- US-A1- 2017 030 505
- US-B1- 6 742 585

## Description

### RELATION TO PRIOR APPLICATIONS

This continuation-in-part application claims the benefit of, and priority through, United States Application 15/097,463 titled "Capping Stack Hydraulic Slip-On Connector Seal Assembly," filed April 13, 2016, which claimed the benefit of, and priority through, Provisional Application 62/146,698, titled "Capping Stack Hydraulic Slip-On Connector Seal Assembly," filed April 13, 2015, and further claims the benefit of, and priority through, through United States Provisional Application 62/782,121, titled "SUBSEA SLIP-ON PIPELINE REPAIR CONNECTOR WITH GRAPHITE PACKING," filed on December 19, 2018.

### BACKGROUND

Sealing performance is critical for success in certain subsea operations, including cap and contain deepwater well control. Current seals require that a specific seal be used for a series of sizes or, alternatively, to use multiple seals as opposed to a single stack.

Current subsea pipeline repair connector technology has relied on an elastomeric sealing element to form a leak tight seal on an in-situ pipeline. The elastomeric seal is generally used in a packer arrangement whereby the seal is compressed within the connector, either mechanically or hydraulically, to allow the seal to conform to the pipeline's outer diameter and form a seal.

Elastomeric seals have been used in pipeline repair connectors mainly due to their ability to form an effective seal and to easily flow into large gaps under compression. This enables the subsea pipeline connector to seal on pipelines with imperfect surface finishes and to accommodate sealing on an in-situ pipeline which for any one nominal pipe size can have varying outer diameters and ovalities. Moreover, elastomeric seals come in many different varieties to suit a particular application. However, these elastomeric seals generally have limitations with regards to temperature range and ability to maintain a seal under thermal cycling.

Graphite seals have many of the benefits of some of the premium elastomeric seals such as wide range of chemical compatibility, no susceptibility to explosive decompression and very little creep with the added advantage of a wider temperature range and better stability in thermal cycling applications. Certain applications within the subsea pipeline repair industry are better suited to a graphite seal than an elastomeric seal. Although graphite seals are commonly used as a sealing element in a variety of applications, use of such seals in subsea pipeline connectors is limited with existing technology requiring substantial preparation of pipeline to enable it to seal due to inability of current graphite seal setup to overcome surface imperfections and accommodate the various combinations of ovality and outer diameters within a given nominal pipe size.

Reference is made to WO 2014/152904 A1, which discloses an end seal assembly configured to seal with a pipe. The seal assembly may include a cylindrical finned insert including an insert portion to be received in the pipe and a base portion at least partially facing the end face of the pipe, the insert portion having at least one annular fin extending radially outwardly, a pocket being formed between the at least one annular fin and the base portion, the at least one annular fin being deformable against the inner surface of the pipe; and a malleable annular end seal positioned near the pocket, the end seal being axially compressed between the base portion and the end face of the pipe and flowing around the end face to the inner surface of the pipe and into the pocket to inhibit fluid from passing from the inner surface of the pipe to the end face of the pipe.

Reference is made to US 5,433,482 A, which discloses a pipeline connector and repair system for sealingly connecting the ends of first and second pipes together without welding or bolting. First and second connectors are provided at each end of a pipe joint and are inserted between the ends of the first and second pipes to be connected, the connectors are extended outwardly for enclosing the ends of the first and second pipes, and dual slip means and dual seal means in each of the connectors are hydraulically set for making the repair.

Reference is also made to WO 03/102360 A1, which discloses a seal for use in temperature and pressure extremes is disclosed. It features springs internal to the sealing members and the ability to seal against pressure differentials from opposed directions. A spacer ring prevents contact from oppositely oriented seal components and at the same time prevents spring and seal collapse under extreme loading conditions. The seal assembly is self-centering in a downhole seal bore and can be used on tools delivered on wireline, where the insertion forces available are at a minimum. The seal can withstand pressure differentials in excess of 13,500 PSI (930.8 bar) and temperatures above 350 degrees Fahrenheit (176.7 Celsius).

### FIGURES

Various figures are included herein.
**Fig. l** is a cutaway view in partial perspective of an exemplary seal;
**Fig. 2** is a view in partial perspective of an exemplary seal;
**Fig. 3** are two views in partial perspective of an exemplary seal assembly;
**Fig. 4** is a cutaway view in partial perspective of an exemplary seal deployed in a housing;
**Fig. 5** is a cutaway view in partial perspective of an exemplary connector;
**Fig. 6** is a cutaway view in partial perspective of a cross-section of the exemplary connector;
**Fig. 7** is a cutaway view in partial perspective of the exemplary connector as part of an exemplary connecting system in a non-compressed state; and
**Fig. 8** is a cutaway view in partial perspective of the exemplary connector as part of an exemplary connecting system in a compressed state;

### DESCRIPTION OF EXEMPLARY EMBODIMENTS

Generally, compared to technology currently existing for pipeline slip-on connectors, the ability of the claimed invention to better overcome the surface imperfections of the pipeline and accommodate the various combinations of ovality and outer diameters within a given nominal pipe size is due to the material composition of seal ≥ that 98% carbon (greater than 98% carbon, according to the claimed invention) which takes advantage of graphite's natural ability to flow under compression, increased volume of seal material within a given packer to accommodate being crushed over large gaps while covering and filling surface imperfections, and effective control of the extrusion gap that is created when designing a one size connector intended to seal along the range and ovality of a given nominal pipeline while at the same time allowing clearance to install the connector over pipeline in unset condition.

In general, graphite seals have different properties than elastomers in terms of how much compression is needed to achieve a desired seal. The invention described herein allows subsea repair connectors for current technology that were originally designed for elastomer packers to be retrofitted with graphite packers with minimal modification. Current art uses a narrow metal graphite composite seal which requires a pipe to be machined to achieve required outer diameter and surface finish prior to install on a tubular such as a pipeline.

In embodiments, the claimed invention, which is defined by the appended independent claims wherein the appended dependent claims define advantageous features, allows pipeline repair connectors to retain many of the beneficial characteristics of some of the more premium elastomers with the added advantage of a wider temperature range and increased suitability for applications requiring thermal cycling. This will make the invention appropriate for use in flowline/riser repair such as where thermal cycling and high temperatures are almost always a requirement.

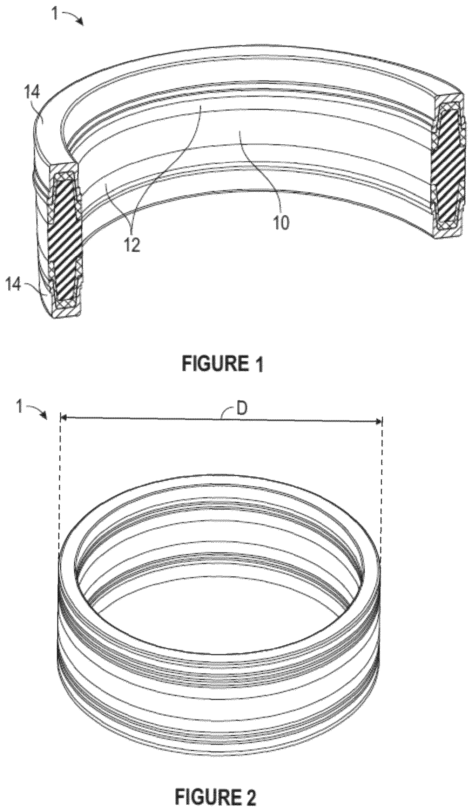

Generally, as described below composite circular connector seals 1 **(****Fig. 1****)** are typically engineered to seal across a predetermined tolerance band for seals such as one specified for a 2018 API Spec 5CT casing, i.e. +1% to -0.5% on the outside diameter. This can help avoid the need and cost of maintaining an inventory of multiple seal packs for example, one for the high side of the casing tolerance and another for the low side and also the operational complexity of having to install the appropriate seal pack in the field. In embodiments, the invention comprises using a graphite seal in a packing configuration within one or more subsea slip-on pipeline repair connectors in a manner that requires minimal to no preparation of pipeline outer diameter. The graphite packer can be used alongside a piston that is either hydraulically or mechanically actuated and can work in systems comprising one or more pipeline repair connectors.

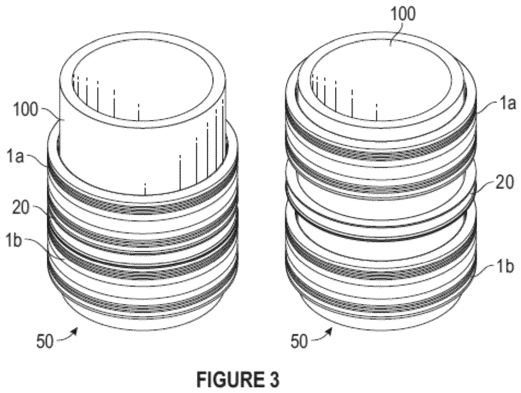

Referring now to **Fig. 1****,** in a first embodiment composite circular connector seal 1 defines a fully circumferential composite seal and is configured to lock and seal over tubular 100 **(****Fig. 3****).** Composite circular connector seal 1 comprises an outer diameter "D" **(****Fig. 2****)** sized to slidingly fit about tubular 100, where tubular 100 comprises a positive and negative outer diameter tolerance range. As used herein, a "tubular" may be a riser, a vertical flow casing, a conduit, or the like, most typically for subsea use.

Composite circular connector seal 1 comprises a composite stack which comprises two substantially circular seal elements 12 and a substantially circular core seal element 10 disposed intermediate to, typically molded to, the two seal elements 12. Each seal element 12 is typically configured to seal about tubular 100 to a predetermined sealing percentage and is typically used as a primary seal anti-extrusion mechanism.

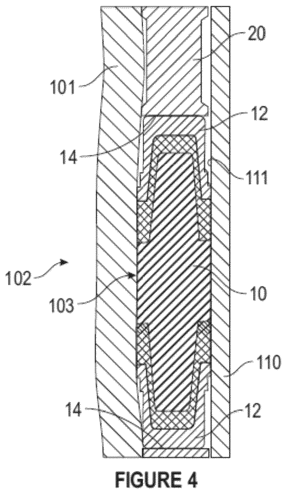

In certain embodiments, each seal element 12 comprises an organic thermoplastic polymer and each is terminated at the non-molded circumferential edge with packer cap 14, which, in preferred embodiments, comprises packer caps comprising Inconel and which may further comprise a fixed diameter. The organic thermoplastic polymer may comprise a polyether ether ketone PEEK which, as core seal element 10 is compressed, moves into seal gap 103 **(****Fig. 4****)** to create a barrier to contain core seal element 10 material.

Referring additionally to **Fig. 4****,** core seal element 10 typically comprises a synthetic rubber, such as nitrile rubber NBR. Typically, as the two seal elements 12 are compressed, the organic thermoplastic polymer, e.g., PEEK, moves into seal gap 103 to create a barrier to contain core seal element 10. As further illustrated in **Fig. 4****,** core seal element 10 is typically configured such that under longitudinal compressive load of composite circular connector seal 1 **(****Fig. 1****)** core seal element 10 flows into seal gap 103 between outside 101 of tubular 100 and an inside 111 of housing 110 to create a positive seal. As used herein, a housing can be another tubular, a wellbore, or another structure, or the like. By way of example and not limitation, this positive seal may be a positive seal on an API 5CT casing across a range of minimum and maximum outer diameter tolerances for tubular 100. In certain embodiments, composite circular connector seal 1 is configured to create a positive seal load maintained on tubular 100 equal to or greater than 1.2 times the maximum allowable operating pressure MAOP of tubular 100. As also illustrated in **Fig. 4****,** the volume of core seal element 10 may remain constant but its shape may alter to match the volume fill during sealing.

In its various embodiments, the flow of both the core seal element 10 material and the seal element 12 material move the inner and outer diameters of packer cap 14 to the limit of seal gap 103, creating a near metal-to-metal seal on the front and back of the core seal element 10 material and the seal element 12 material. In most embodiments, this prevents extrusive flow of either the core seal element 10 material or the seal element 12 material from either end of composite circular connector seal 12 during full compressive load and operating pressure in tubular 10.

Referring now to **Fig. 3****,** in an embodiment slip-on connector seal assembly 50 comprises two composite circular connector seals 1, e.g. first composite circular connector seal 1a and second composite circular connector seal 1b, and metal ring 20, sometimes referred to as a Lantern Ring, disposed intermediate first composite circular connector seal 1a and second composite circular connector seal 1b. These two composite circular connector seals 1 are as described above.

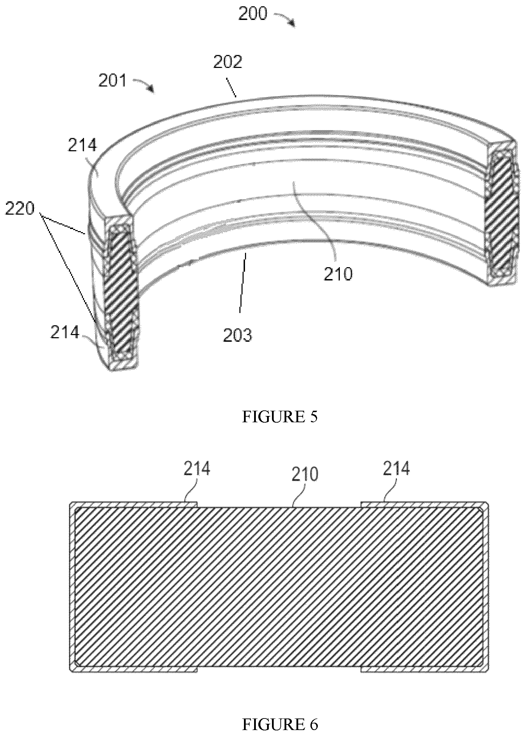

Referring now to **Figs. 5** and **6****,** in a further exemplary embodiment pipeline connector 200 comprises graphite packer 201; first side 202; second side 203 opposite first side 202; two flexible C-shaped rings 214, one per each of first side 202 and second side 203; and a set of slip limiting rings 220 placed on either side of graphite packer 201 against first C-shaped ring 214 and second C-shaped ring 214, typically adapted to aid mitigation against extrusion. First C-shaped ring 214 and second C-shaped ring 214 are also typically configured to inhibit graphite seal 210 from extruding out by being sufficiently flexible to flare out before graphite seal 210 is compressed into gap 204 between an inner diameter of graphite seal 210 and the outer diameter of tubular 100, thereby flaring out to meet the outer diameter of tubular 100. This further aids in containing graphite seal 210 about the outer diameter of tubular 100, such as to allow for effective capture of graphite seal 210 during connector set.

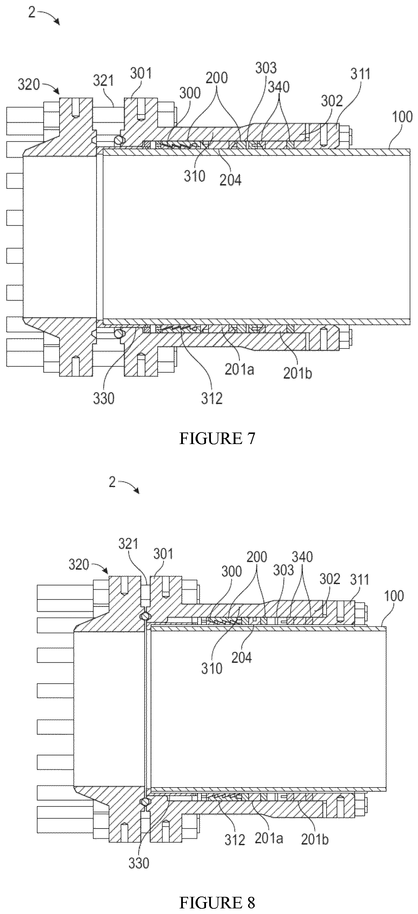

Graphite packer 201 comprises graphite seal 210 which comprises an inner diameter sized to fit about an outer diameter of tubular 100 (Fig. 7), e.g. slidingly fit. Graphite packer 201 may be configured in a single seal or dual seal configuration as needed.

Graphite seal 210 comprises a composition sufficient to flow under compression, according to the claimed invention the material composition of the graphite seal is greater than 98% carbon.

Each of first C-shaped ring 214 and second C-shaped ring 214 may comprise a metal, a Kevlar backing, or wire mesh graphite backing, or the like, or a combination thereof, according to the claimed invention they comprise a Kevlar backing and either a metal or a wire mesh graphite backing. As noted above, and referring additionally to Fig. 6, first flexible C-shaped ring 214 is disposed on first side 202 and second flexible C-shaped ring 214 is disposed on second side 203. Each of first flexible C-shaped ring 214 and second flexible C-shaped ring 214 is configured to operate as a primary extrusion mechanism for graphite seal 210. To mitigate extrusion of graphite seal, when graphite packer 201 is compressed, first and second C-shaped rings 214 flare out to meet the outer diameter of tubular 100 and to further contain graphite seal 210 along the outer diameter of tubular 100, typically at every point along the outer diameter of tubular 100, to keep graphite seal 210 from extruding out. First and second C-shaped rings 214 are flexible enough to flare out before graphite material in graphite seal 210 is compressed into gap 204 (Fig. 7) between and inner diameter of graphite seal 210 and the outer diameter of tubular 100, thereby aiding effective capture of graphite seal 210 during the setting of pipeline connector 200. As also noted above, slip limiting rings 220 are typically placed on either side of graphite packer 201 against C-shaped rings 214 to further mitigate against extrusion. These slip limiting rings 220 typically prevent C-shaped rings 214 as a primary extrusion mechanism from yielding or flaring out excessively to where graphite material is no longer contained, especially at larger sizes and higher pressure classes.

Referring now to **Figs. 7** and **8****,** tubular connection system 2 comprises slip 300, first pipeline repair connector 200 as described herein above sized to fit about an outer diameter of tubular 100 within tubular housing 310, and connector activator 330 operatively in communication with housing tubular 310 and operative to compress or decompress graphite packer 201.

Slip 300 typically comprises substantially tubular housing 310 sized to fit about an outer diameter of tubular 100. Tubular housing 310 comprises first end 301 and second end 302 and is typically sized to slidingly fit about the outer diameter of tubular 100.

In embodiments, one or more end caps 311 is disposed at second end 302 of tubular housing 310.

In embodiments, one or more grips 312 may be present and disposed within tubular housing 310 intermediate first end 301 first pipeline repair connector 200.

Connector activator 300 may comprise a piston. In these embodiments, the piston may comprise a hydraulically activated piston or a mechanically activated piston. In certain of these embodiments as well, connector activator 300 is operatively in communication with a single pipeline repair connector 200 although if other pipeline repair connectors 200 are present, as described below, connector activator 300 may be operatively in communication with one or more such pipeline repair connectors 200.

In certain embodiments, connector activator 330 further comprises flange 320 configured to fit at least partially about the outer diameter of tubular 100 and connector 321 disposed intermediate flange 320 and tubular housing 310. In these embodiments, connector actuator 330 is typically operatively in communication with flange 320 and operative to move flange 320 about the outer diameter of tubular 100.

In certain embodiments, tubular connection system 2 further comprises second pipeline repair connector 200 substantially similar to first pipeline repair connector 200 where second pipeline repair connector 200 is also disposed within tubular housing 310. In these embodiments, one or more annulus rings 303 may be present and disposed within tubular housing 310 intermediate first pipeline repair connector 200 and second pipeline repair connector 200.

**In the operation of exemplary embodiments,** referring back to **Fig. 3****,** composite circular connector seals 1 and/or slip-on connector seal assembly 50 have the capacity to seal over a substantially complete range of outer diameter tolerances for such seals. By way of example and not limitation, in certain embodiments one or more slip-on connector seal assemblies 50 and/or composite circular connector seals 1 may be used as a slip-on riser end connector for an out-of-control riser blowout preventor BOP situation. In those embodiments, one or more slip-on connector seal assemblies 50 and/or composite circular connector seals 1 may be attached below a BOP capping stack and lowered onto a free-flowing riser in the event of an uncontrollable blowout condition. Once installed onto the free-flowing riser, these one or more slip-on connector seal assemblies 50 and/or composite circular connector seals 1 may then be mechanically attached and sealed to the outer diameter of the tubular.

Referring generally to **Figs. 3** and **4**, one or more slip-on connector seal assemblies 50 and/or composite circular connector seals 1 is disposed over a tubular, conduit, casing, or the like such as tubular 100 and positioned in-between outside 101 of tubular 100 and inside 111 of housing 110. Tubular 100 may have one or more deflections, shown in **Fig. 4** as bulge 102, as well as positive and negative outer diameter tolerance ranges. When pressure is applied, core seal element 10 is deformed to contact outside 101 of tubular 100 and inside 111 of housing 110 at seal contact region 103.

One or more slip-on connector seal assemblies 50 and/or composite circular connector seals 1 may be locked and sealed onto tubular 100 by maneuvering the one or more slip-on connector seal assemblies 50 and/or composite circular connector seals 1, as described above, to a predetermined position on tubular 100 where composite circular connector seal 1 is installed and configured to lock and seal over tubular 100.

Once installed onto tubular 100, one or more of positioned composite circular connector seals 1 are mechanically attached, locking onto tubular 100 and being sealed onto outer diameter 101 of tubular 100.

If two composite circular connector seals 1 are used, e.g. if one or more slip-on connector seal assemblies 50 is used, the second composite circular connector seal 1b **(****Fig. 3****)** may be maneuvered to a second predetermined position on tubular 100 proximate the first composite circular connector seal 1a **(****Fig. 2****),** either separately or as part of slip-on connector seal assembly 50, and a reduced test pressure applied between two composite circular connector seals 1a, 1b to validate that a positive seal has been obtained prior to applying a full maximum allowable operating pressure to tubular 100. Typically, as described above, two composite circular connector seals 1 are separated by metal ring 20.

If synthetic rubber and PEEK materials are used, a flow of both the synthetic rubber and PEEK materials may be allowed to move the inner diameter and outer diameter of packer cap 14 to the limit of seal gap 103, thus creating a near metal-to-metal seal on the front and back of the synthetic rubber/PEEK core of composite circular connector seal 1 to prevent extrusive flow of either the synthetic rubber or PEEK materials from either end of composite circular connector seal assembly 50 during full compressive load and operating pressure in tubular 100. Additionally, for such embodiments, each seal element 12 that is molded to the synthetic rubber may be used as the primary seal anti-extrusion mechanism such that as the synthetic rubber seal is compressed, the PEEK element moves into seal gap 103 to create a barrier to contain the synthetic rubber. As will thus be apparent to one of ordinary skill in the sealing arts, under longitudinal compressive load of the connector, core seal element 10 flows into seal gap 103 to create a positive seal and, typically, its volume remains constant but its shape is altered to match the volume fill.

Additionally, composite circular connector seal 1 may be used to create a positive seal on API 5CT casing across a range of minimum and maximum outer diameter tolerances. In certain embodiments composite circular connector seal 1 is used to create a positive seal load maintained on the casing equal to or greater than 1.2 times the maximum allowable operating pressure MAOP of tubular 100 which, as noted before, may be a vertical free-flowing casing.

In certain embodiments, core seal element 10 is allowed to flow into seal gap 103 to create a positive seal under longitudinal compressive load of composite circular connector seal 1. The volume of core seal element 10 may be maintained at a constant value and a shape of core seal element 10 may be altered to match the volume filled by core seal element 10 during sealing.

Referring now to **Figs. 7** and **8**, pipeline connector 200 may be sealed about tubular 100 by maneuvering pipeline connector 200 to a position about tubular 100, where tubular 100 typically comprises a positive and negative outer diameter tolerance range. Maneuvering pipeline connector 200 typically comprises maneuvering pipeline connector 200 to a position intermediate an end of tubular 100 such as by sliding pipeline connector 200 along tubular 100.

In certain embodiments, two tubulars 100 are present where the end of first tubular 100 and the end of second tubular 100 are disposed proximate each other (not illustrated in the figures). In these embodiments, each tubular also typically comprises a positive and negative outer diameter tolerance range. In these embodiments, a second pipeline connector 200 may be present and maneuvering pipeline connector 200 typically comprises maneuvering first pipeline connector 200 to a position intermediate an end of a first tubular 100 and maneuvering second pipeline connector 200 to a position intermediate an end of second tubular 100 and first pipeline connector 200.

As described above, pipeline connector 200 is configured to lock and seal over tubular 100 and, if there are two tubulars 100, to lock and seal over an end of one tubular 100 or over ends of tubulars 100 which are proximate to or abutting each other. Connector activator 330 is used to compress pipeline connector 200 once pipeline connector 200 is placed in a desired position, thereby compressing graphite packer 201, such as by using connector actuator 330. During compression, first C-shaped ring 214 and second C-shaped ring 214 are allowed to operate as a primary extrusion mechanism for graphite seal 210 by allowing first C-shaped ring 214 and second C-shaped ring 214 to flare out before graphite seal 210 is compressed into gap 204 between an inner diameter of graphite seal 210 and the outer diameter of tubular 100 to meet the outer diameter of tubular 100 and to contain graphite seal 210 at a set of points, e.g. every point, along the outer diameter of tubular 100 from extruding out. Flared first C-shaped ring 214 and flared second C-shaped ring 214 are used to capture graphite seal 210 during connector set. The increased volume of graphite seal material generally accommodates being crushed over large gaps while covering and filling surface imperfections.

Slip limiting rings 220 may be present and typically used to further mitigate against extrusion by preventing first C-shaped ring 214 and second C-shaped ring 214 from yielding or flaring out excessively to where graphite seal 210 is no longer contained.

As described above, where two pipeline connectors 200 and their respective graphite packers 200 are present annulus ring 303 may be disposed within housing 301 intermediate first graphite packer 310 and second graphite packer 310.

The foregoing disclosure and description of the inventions are illustrative and explanatory. Various changes in the size, shape, and materials, as well as in the details of the illustrative construction and/or an illustrative method may be made without departing from the scope of the claims.

## Claims

1. A pipeline connector (200), comprising:
a. a graphite packer (201), comprising:
i. a first side (202);
ii. a second side (203) disposed opposite the first side;
iii. a first flexible C-shaped ring (214) disposed on the first side;
iv. a second flexible C-shaped ring (214) disposed on the second side; and
v. a graphite seal (210) disposed intermediate the first flexible C-shaped ring and the second flexible C-shaped ring, the graphite seal comprising an inner diameter sized to slidingly fit about an outer diameter of a tubular (100) and a graphite-based composition sufficient to flow under compression, the first flexible C-shaped ring and the second flexible C-shaped ring configured to operate as a primary extrusion mechanism for the graphite seal; and
b. a set of slip limiting rings (220) disposed on either the first side or the second side of the graphite packer (201) against the first C-shaped ring or the second C-shaped ring;
**characterised in that** the first C-shaped ring and the second C- shaped ring comprise a Kevlar backing and either a metal or a wire mesh graphite backing; and wherein the material composition of the graphite seal is greater than 98% carbon.

2. The pipeline connector of Claim 1, wherein the first C-shaped ring and the second C-shaped ring are configured to inhibit the graphite seal from extruding out by comprising a flexibility sufficient to flare out to meet the outer diameter of the tubular before the graphite seal is compressed into a gap (204) between an inner diameter of the graphite seal and the outer diameter of the tubular and to contain the graphite seal about the outer diameter of the tubular; and, optionally,
wherein the set of slip limiting rings are configured to prevent the first C-shaped ring and the second C-shaped ring from yielding or flaring out excessively to where the graphite seal is no longer contained.

3. A tubular connection system (2), comprising:
a. a slip (300), comprising a substantially tubular housing (310) sized to fit about an outer diameter of a tubular, the tubular housing (310) comprising a first end (301) and second end (302);
b. a first pipeline connector (200) according to Claim 1, the first pipeline connector (200) sized to fit within the tubular housing (310);and
c. a connector activator (330) operatively in communication with the tubular housing (310) and operative to compress or decompress the graphite packer.

4. The tubular connection system of Claim 3, further comprising an end cap (311) disposed at the second end of the tubular housing (310).

5. The tubular connection system of Claim 3, further comprising:
a. a second pipeline connector (200) identically shaped with respect to the first pipeline connector (200), the second pipeline connector (200) disposed within the tubular housing (310) proximate the first pipeline connector (200); and
b. an annulus ring (303) disposed within the tubular housing (310) about the tubular intermediate the first pipeline connector (200) and the second pipeline connector (200).

6. The tubular connection system of Claim 3, wherein the tubular housing (310) is sized to slidingly fit about the outer diameter of the tubular.

7. The tubular connection system of Claim 3, further comprising a grip (312) disposed within the tubular housing (310) about the tubular intermediate the first end of the housing and the graphite packer.

8. The tubular connection system of Claim 3, wherein the connector activator (330) comprises a piston; and, optionally,
wherein the piston comprises a hydraulically activated piston or a mechanically activated piston.

9. The tubular connection system of Claim 3, wherein the connector activator (330) is operatively in communication with a single pipeline repair connector (200); or
wherein the connector activator (330) is operatively in communication with a plurality of pipeline repair connectors (200).

10. The tubular connection system of Claim 3, wherein the connector activator (330) further comprises:
a. a flange (320) configured to fit at least partially about the outer diameter of the tubular; and
b. a connector (321) disposed intermediate the flange and the tubular housing (310), the connector actuator (330) operatively in communication with the flange and operative to move the flange about the outer diameter of the tubular.

11. A method of sealing a connector using a tubular connection system (2), the tubular connection system (2) comprising a slip (300) which comprises a substantially tubular housing (310) sized to fit about an outer diameter of a tubular, the tubular housing (310) comprising a first end (301) and second end (302); a first pipeline connector (200) disposed within the tubular housing (310), the first pipeline connector (200) comprising a graphite packer (201) comprising a first side (202) a second side (203) disposed opposite the first side, a first flexible C-shaped ring (214) disposed on the first side, a second flexible C-shaped ring (214) disposed on the second side, and a graphite seal (210) disposed intermediate the first flexible C-shaped ring and the second flexible C-shaped ring wherein the graphite seal comprises an inner diameter sized to slidingly fit about an outer diameter of the tubular (100) and a graphite-based composition comprising greater than 98% carbon sufficient to flow under compression and where the first flexible C-shaped ring and the second flexible C-shaped ring are configured to operate as a primary extrusion mechanism for the graphite seal, the first C-shaped ring and the second C-shaped ring comprising a Kevlar backing and either a metal or a wire mesh graphite backing; and a set of slip limiting rings (220), a first slip limiting ring of the set of slip limiting rings disposed on the first side of the graphite packer (201) against the first C-shaped ring and a second slip limiting ring of the set of slip limiting rings disposed on the second side of the graphite packer (201) against the second C-shaped ring; and a connector activator (330) operatively in communication with the tubular housing (310) and operative to compress or decompress the graphite packer, the method comprising:
a. maneuvering the tubular connection system to a position about the outer diameter of the tubular, the tubular comprising a positive and negative outer diameter tolerance range;
b. using the connector activator to compress the first pipeline connector, thereby compressing the graphite packer;
c. during compression, allowing the first C-shaped ring and the second C-shaped ring to operate as the primary extrusion mechanism for the graphite seal by allowing the first C-shaped ring and the second C-shaped ring to flare out before the graphite seal is compressed into a gap between an inner diameter of the graphite seal and the outer diameter of the tubular to meet the outer diameter of the tubular and to contain the graphite seal along the outer diameter of the tubular, thereby preventing the graphite seal from leaking out;
d. using the flared first C-shaped ring and the flared second C-shaped ring to capture the graphite seal during setting of the first pipeline connector; and
e. using the slip limiting rings to mitigate against extrusion by preventing the first C- shaped ring and the second C-shaped ring from yielding or flaring out excessively to where the graphite seal is no longer contained.

12. The method of sealing a connector of Claim 11, wherein a volume of graphite-based composition increases to accommodate being crushed over large gaps while covering and filling surface imperfections.

13. The method of sealing a connector of Claim 11, wherein the tubular comprises a first tubular and a separate second tubular and maneuvering the tubular connection system to the position about the tubular comprises maneuvering the first pipeline connector to a position intermediate the end of a first tubular and an end of the second tubular, the end of the first tubular and the end of the second tubular disposed proximate each other, each of the first and second tubulars comprising a positive and negative outer diameter tolerance range, the first pipeline connector further configured to lock and seal over the ends of the first and second tubulars.

14. The method of sealing a connector of Claim 11, wherein:
a. the tubular comprises a first tubular and a separate second tubular;
b. the tubular connection system comprises a second pipeline connector disposed within the tubular housing (310); and
c. maneuvering the tubular connection system to the position about an outer diameter of the tubular comprises maneuvering the tubular connection system such that the first pipeline connector is in a position proximate an end of the first tubular and the second pipeline connector is in a position about the second tubular intermediate the first pipeline connector and a location proximate an end of the second tubular, the end of the first tubular and the end of the second tubular disposed proximate each other, each of the first tubular and the second tubular comprising a positive and negative outer diameter tolerance range, each of the first pipeline connector and the second pipeline connection further configured to lock and seal over an end of the first tubular or the second tubular.

## Patentansprüche

1. Pipeline-Verbinder (200), der Folgendes umfasst:
a. einen Graphit-Packer (201), der Folgendes umfasst:
i. eine erste Seite (202),
ii. eine der ersten Seite gegenüber angeordnete zweite Seite (203),
iii. einen ersten flexiblen C-förmigen Ring (214), der auf der ersten Seite angeordnet ist,
iv. einen zweiten flexiblen C-förmigen Ring (214), der auf der zweiten Seite angeordnet ist, und
v. eine Graphitdichtung (210), die zwischen dem ersten und dem zweiten flexiblen C-förmigen Ring angeordnet ist, wobei die Graphitdichtung einen Innendurchmesser aufweist, der so bemessen ist, dass sie sich auf einen Außendurchmesser eines Rohrs (100) schieben lässt, und eine graphitbasierte Zusammensetzung aufweist, die unter Druck fließfähig ist, wobei der erste und der zweite flexible C-förmige Ring so ausgelegt sind, dass sie als primärer Verdrängungsmechanismus für die Graphitdichtung dienen, und
b. einen Satz Gleitbegrenzungsringe (220), die entweder auf der ersten oder der zweiten Seite des Graphit-Packers (201) an dem ersten oder dem zweiten C-förmigen Ring angeordnet sind,
**dadurch gekennzeichnet, dass**
der erste und der zweite C-förmige Ring einen Kevlar-Träger und entweder einen Metall- oder einen Drahtgeflecht-Graphitträger umfassen und
wobei die Materialzusammensetzung der Graphitdichtung mehr als 98% Kohlenstoff umfasst.

2. Pipeline-Verbinder nach Anspruch 1, wobei der erste und der zweite C-förmige Ring so ausgelegt sind, dass sie ein Herausdrücken der Graphitdichtung verhindern, indem sie eine solche Flexibilität aufweisen, dass sie sich aufweiten und so an den Außendurchmesser des Rohrs stoßen, bevor die Graphitdichtung in einen Spalt (204) zwischen einem Innendurchmesser der Graphitdichtung und dem Außendurchmesser des Rohrs gepresst wird, und die Graphitdichtung um den Außendurchmesser des Rohrs herum eingrenzen, und wahlweise
wobei der Satz Gleitbegrenzungsringe so ausgelegt ist, dass diese verhindern, dass der erste und der zweite C-förmige Ring so sehr nachgeben oder sich aufweiten, dass die Graphitdichtung nicht mehr eingegrenzt wird.

3. Rohrverbindungssystem (2), das Folgendes umfasst:
a. ein Aufsteckelement (300), das ein im Wesentlichen rohrförmiges Gehäuse (310) umfasst, welches so bemessen ist, dass es um einen Außendurchmesser eines Rohrs passt, wobei das rohrförmige Gehäuse (310) ein erstes Ende (301) und ein zweites Ende (302) umfasst,
b. einen ersten Pipeline-Verbinder (200) nach Anspruch 1, wobei der erste Pipeline-Verbinder (200) so bemessen ist, dass er in das rohrförmige Gehäuse (310) passt, und
c. einen Verbinderaktivierer (330), der mit dem rohrförmigen Gehäuse (310) wirkverbunden ist und dazu dient, den Graphit-Packer zu komprimieren oder zu dekomprimieren.

4. Rohrverbindungssystem nach Anspruch 3, das ferner eine Abschlusskappe (311) umfasst, die am zweiten Ende des rohrförmigen Gehäuses (310) angeordnet ist.

5. Rohrverbindungssystem nach Anspruch 3, das ferner Folgendes umfasst:
a. einen zweiten Pipeline-Verbinder (200) von gleicher Form wie der erste Pipeline-Verbinder (200), wobei der zweite Pipeline-Verbinder (200) in dem rohrförmigen Gehäuse (310) in der Nähe des ersten Pipeline-Verbinders (200) angeordnet ist, und
b. einen Kreisring (303), der zwischen dem ersten Pipeline-Verbinder (200) und dem zweiten Pipeline-Verbinder (200) in dem rohrförmigen Gehäuse (310) um das Rohr herum angeordnet ist.

6. Rohrverbindungssystem nach Anspruch 3, wobei das rohrförmige Gehäuse (310) so bemessen ist, dass es sich auf den Außendurchmesser des Rohrs schieben lässt.

7. Rohrverbindungssystem nach Anspruch 3, das ferner einen Halter (312) umfasst, der zwischen dem ersten Ende des Gehäuses und dem Graphit-Packer in dem rohrförmigen Gehäuse (310) um das Rohr herum angeordnet ist.

8. Rohrverbindungssystem nach Anspruch 3, wobei der Verbinderaktivierer (330) einen Kolben umfasst und wahlweise
wobei der Kolben einen hydraulisch oder einen mechanisch aktivierten Kolben umfasst.

9. Rohrverbindungssystem nach Anspruch 3, wobei der Verbinderaktivierer (330) mit einem einzelnen Pipeline-Reparaturverbinder (200) wirkverbunden ist oder
wobei der Verbinderaktivierer (330) mit mehreren Pipeline-Reparaturverbindern (200) wirkverbunden ist.

10. Rohrverbindungssystem nach Anspruch 3, wobei der Verbinderaktivierer (330) ferner Folgendes umfasst:
a. einen Flansch (320), der so ausgelegt ist, dass er zumindest teilweise auf den Außendurchmesser des Rohrs passt, und
b. einen Verbinder (321), der zwischen dem Flansch und dem rohrförmigen Gehäuse (310) angeordnet ist, wobei das Verbinderstellelement (330) mit dem Flansch wirkverbunden ist und dazu dient, diesen um den Außendurchmesser des Rohrs herum zu bewegen.

11. Verfahren zum Abdichten eines Verbinders mithilfe eines Rohrverbindungssystems (2), wobei das Rohrverbindungssystem (2) Folgendes umfasst: ein Aufsteckelement (300), das ein im Wesentlichen rohrförmiges Gehäuse (310) umfasst, welches so bemessen ist, dass es auf einen Außendurchmesser eines Rohrs passt, wobei das rohrförmige Gehäuse (310) ein erstes Ende (301) und ein zweites Ende (302) umfasst, einen ersten Pipeline-Verbinder (200), der in dem rohrförmigen Gehäuse (310) angeordnet ist, wobei der erste Pipeline-Verbinder (200) Folgendes umfasst: einen Graphit-Packer (201) mit einer ersten Seite (202), einer der ersten Seite gegenüber angeordneten zweiten Seite (203), einem ersten flexiblen C-förmigen Ring (214), der auf der ersten Seite angeordnet ist, einem zweiten flexiblen C-förmigen Ring (214), der auf der zweiten Seite angeordnet ist, und einer Graphitdichtung (210), die zwischen dem ersten flexiblen C-förmigen Ring und dem zweiten flexiblen C-förmigen Ring angeordnet ist, wobei die Graphitdichtung einen Innendurchmesser aufweist, der so bemessen ist, dass sie sich auf einen Außendurchmesser des Rohrs (100) schieben lässt, und eine graphitbasierte Zusammensetzung aufweist, die mehr als 98% Kohlenstoff umfasst und somit unter Druck fließfähig ist, und wobei der erste und der zweite flexible C-förmige Ring so ausgelegt sind, dass sie als primärer Verdrängungsmechanismus für die Graphitdichtung dienen, wobei der erste und der zweite C-förmige Ring einen Kevlar-Träger und entweder einen Metall- oder einen Drahtgeflecht-Graphitträger umfassen, und einen Satz Gleitbegrenzungsringe (220), wobei ein erster Gleitbegrenzungsring aus dem Satz Gleitbegrenzungsringe auf der ersten Seite des Graphit-Packers (201) an dem ersten C-förmigen Ring und ein zweiter Gleitbegrenzungsring aus dem Satz Gleitbegrenzungsringe auf der zweiten Seite des Graphit-Packers (201) an dem zweiten C-förmigen Ring angeordnet ist, und einen Verbinderaktivierer (330), der mit dem rohrförmigen Gehäuse (310) wirkverbunden ist und dazu dient, den Graphit-Packer zu komprimieren oder zu dekomprimieren, wobei das Verfahren Folgendes umfasst:
a. Manövrieren des Rohrverbindungssystems in eine Position am Außendurchmesser des Rohrs, wobei das Rohr einen positiven und einen negativen Außendurchmessertoleranzbereich aufweist,
b. Benutzen des Verbinderaktivierers zum Komprimieren des ersten Pipeline-Verbinders, wodurch der Graphit-Packer komprimiert wird,
c. bei Druck Zulassen, dass der erste und der zweite C-förmige Ring als primärer Verdrängungsmechanismus für die Graphitdichtung dienen, indem zugelassen wird, dass sich der erste und der zweite C-förmige Ring aufweiten, bevor die Graphitdichtung in einen Spalt zwischen einem Innendurchmesser der Graphitdichtung und dem Außendurchmesser des Rohrs gepresst wird, und so an den Außendurchmesser des Rohrs stoßen und die Graphitdichtung am Außendurchmesser des Rohrs entlang eingrenzen, wodurch sie verhindern, dass die Graphitdichtung austritt,
d. mithilfe des aufgeweiteten ersten und zweiten C-förmigen Rings Einfassen der Graphitdichtung beim Einstellen des ersten Pipeline-Verbinders und
e. mithilfe der Gleitbegrenzungsringe Einschränken einer Verdrängung, indem verhindert wird, dass der erste und der zweite C-förmige Ring so sehr nachgeben oder sich aufweiten, dass die Graphitdichtung nicht mehr eingegrenzt wird.

12. Verfahren zum Abdichten eines Verbinders nach Anspruch 11, wobei sich ein Volumen von graphitbasierter Zusammensetzung vergrößert, so dass es über große Spalte zusammengedrückt werden kann und gleichzeitig Oberflächenfehler abgedeckt und aufgefüllt werden.

13. Verfahren zum Abdichten eines Verbinders nach Anspruch 11, wobei das Rohr ein erstes und ein separates zweites Rohr umfasst und das Manövrieren des Rohrverbindungssystems in die Position am Rohr das Manövrieren des ersten Pipeline-Verbinders in eine Position zwischen dem Ende eines ersten Rohrs und einem Ende des zweiten Rohrs umfasst, wobei das Ende des ersten Rohrs und das Ende des zweiten Rohrs nahe beieinander angeordnet sind, wobei das erste und das zweite Rohr jeweils einen positiven und einen negativen Außendurchmessertoleranzbereich aufweisen, wobei der erste Pipeline-Verbinder ferner so ausgelegt ist, dass er die Enden des ersten und des zweiten Rohrs verschließt und abdichtet.

14. Verfahren zum Abdichten eines Verbinders nach Anspruch 11, wobei:
a. das Rohr ein erstes und ein separates zweites Rohr umfasst,
b. das Rohrverbindungssystem einen zweiten Pipeline-Verbinder umfasst, der in dem rohrförmigen Gehäuse (310) angeordnet ist, und
c. das Manövrieren des Rohrverbindungssystems in die Position an einem Außendurchmesser des Rohrs das derartige Manövrieren des Rohrverbindungssystems umfasst, dass sich der erste Pipeline-Verbinder in einer Position in der Nähe eines Endes des ersten Rohrs und sich der zweite Pipeline-Verbinder zwischen dem ersten Pipeline-Verbinder und einer Stelle in der Nähe eines Endes des zweiten Rohrs in einer Position am zweiten Rohr befindet, wobei das Ende des ersten Rohrs und das Ende des zweiten Rohrs nahe beieinander angeordnet sind, wobei das erste und das zweite Rohr jeweils einen positiven und einen negativen Außendurchmessertoleranzbereich aufweisen, wobei der erste und der zweite Pipeline-Verbinder ferner jeweils so ausgelegt sind, dass sie ein Ende des ersten oder des zweiten Rohrs verschließen und abdichten.

## Revendications

1. Raccord de pipeline (200), comprenant :
a. un packer en graphite (201), comprenant :
i. un premier côté (202) :
ii. un deuxième côté (203) disposé à l'opposé du premier côté ;
iii. une première bague flexible en forme de C (214) disposée sur le premier côté ;
iv. une deuxième bague flexible en forme de C (214) disposée sur le deuxième côté ; et
v. un joint en graphite (210) disposé en position intermédiaire entre la première bague flexible en forme de C et la deuxième bague flexible en forme de C, le joint en graphite présentant un diamètre intérieur de taille à s'adapter par coulissement autour d'un diamètre extérieur d'un tubulaire (100) et une composition à base de graphite suffisante pour s'écouler sous compression, la première bague flexible en forme de C et la deuxième bague flexible en forme de C étant configurés pour servir de mécanisme d'extrusion primaire pour le joint en graphite ; et
b. un ensemble de bagues limitant le glissement (220) disposées soit sur le premier côté soit sur le deuxième côté du packer en graphite (201) contre la première bague en forme de C ou la deuxième bague en forme de C ;
**caractérisé par le fait que** la première bague en forme de C et la deuxième bague en forme de C comprennent un soutien en Kevlar et un soutien soit en métal soit en treillis métallique de graphite ; et
dans lequel la composition du matériau du joint en graphite est supérieure à 98% de carbone.

2. Raccord de pipeline de la revendication 1, dans lequel la première bague en forme de C et la deuxième bague en forme de C sont configurées pour empêcher le joint en graphite de s'extruder en comprenant une flexibilité suffisante pour s'évaser afin de rejoindre le diamètre extérieur du tubulaire avant que le joint en graphite soit comprimé dans un espace (204) entre un diamètre intérieur du joint en graphite et le diamètre extérieur du tubulaire et pour retenir le joint en graphite autour du diamètre extérieur du tubulaire ; et, éventuellement,
dans lequel l'ensemble de bagues limitant le glissement sont configurées pour empêcher la première bague en forme de C et la deuxième bague en forme de C de céder ou de s'évaser excessivement jusqu'au point où le joint en graphite n'est plus retenu.

3. Système de raccordement tubulaire (2), comprenant :
a. un élément coulissant (300) comprenant un boîtier sensiblement tubulaire (310) de taille à s'ajuster autour d'un diamètre extérieur d'un tubulaire, le boîtier tubulaire (310) comprenant une première extrémité (301) et une deuxième extrémité (302);
b. un premier raccord de pipeline (200) selon la revendication 1, le premier raccord de pipeline (200) étant de taille à s'ajuster à l'intérieur du boîtier tubulaire (310) ; et
c. un activateur de raccordement (330) en communication fonctionnelle avec le boîtier tubulaire (310) et servant à compresser ou décompresser le packer en graphite.

4. Système de raccordement tubulaire de la revendication 3, comprenant en sus un bouchon d'extrémité (311) disposé au niveau de la deuxième extrémité du boîtier tubulaire (310).

5. Système de raccordement tubulaire de la revendication 3, comprenant en sus :
a. un deuxième raccord de pipeline (200) de forme identique au premier raccord de pipeline (200), le deuxième raccord de pipeline (200) étant disposé à l'intérieur du boîtier tubulaire (310) à proximité du premier raccord de pipeline (200) ; et
b. une bague annulaire (303) disposée à l'intérieur du boîtier tubulaire (310) autour du tubulaire en position intermédiaire entre le premier raccord de pipeline (200) et le deuxième raccord de pipeline (200).

6. Système de raccordement tubulaire de la revendication 3, dans lequel le boîtier tubulaire (310) est de taille à s'ajuster par glissement autour du diamètre extérieur du tubulaire.

7. Système de raccordement tubulaire de la revendication 3, comprenant en sus une pince (312) disposée à l'intérieur du boîtier tubulaire (310) autour du tubulaire en position intermédiaire entre la première extrémité du boîtier et le packer en graphite.

8. Système de raccordement tubulaire de la revendication 3, dans lequel l'activateur de raccordement (330) comprend un piston, et, éventuellement,
dans lequel le piston comprend un piston à actionnement hydraulique ou un piston à actionnement mécanique.

9. Système de raccordement tubulaire de la revendication 3, dans lequel l'activateur de raccordement (330) est en communication opérationnelle avec un seul raccord de réparation de pipeline (200) ; ou
dans lequel l'activateur de raccordement (330) est en communication opérationnelle avec une pluralité de raccords de réparation de pipeline (200).

10. Système de raccordement tubulaire de la revendication 3, dans lequel l'activateur de raccordement (330) comprend en sus :
a. une bride (320) configurée pour s'ajuster au moins partiellement autour du diamètre extérieur du tubulaire ; et
b. un raccord (321) disposé en position intermédiaire entre la bride et le boîtier tubulaire (310), l'activateur de raccordement (330) étant en communication opérationnelle avec la bride et servant à déplacer la bride autour du diamètre extérieur du tubulaire.

11. Procédé destiné à assurer l'étanchéité d'un raccord utilisant un système de raccordement tubulaire (2), le système de raccordement tubulaire (2) comprenant un élément coulissant (300) qui comprend un boîtier sensiblement tubulaire (310) de taille à s'ajuster autour d'un diamètre extérieur d'un tubulaire, le boîtier tubulaire (310) comprenant une première extrémité (301) et une deuxième extrémité (302) ; un premier raccord de pipeline (200) disposé à l'intérieur du boîtier tubulaire (310), le premier raccord de pipeline (200) comprenant un packer en graphite (201) qui présente un premier côté (202), un deuxième côté (203) disposé à l'opposé du premier côté, une première bague flexible en forme de C (214) disposée sur le premier côté, une deuxième bague flexible en forme de C (214) disposée sur le deuxième côté et un joint en graphite (210) disposé en position intermédiaire entre la première bague flexible en forme de C et la deuxième bague flexible en forme de C, le joint en graphite présentant un diamètre intérieur de taille à s'ajuster par glissement autour d'un diamètre extérieur du tubulaire (100) et une composition à base de graphite comprenant plus de 98% de carbone suffisante pour s'écouler sous compression, et la première bague flexible en forme de C et la deuxième bague flexible en forme de C étant configurées pour servir mécanisme d'extrusion primaire pour le joint en graphite, la première bague en forme de C et la deuxième bague en forme de C comprenant un soutien en Kevlar et un soutien soit en métal soit en treillis métallique de graphite ; et un ensemble de bagues limitant le glissement (220), une première bague limitant le glissement de l'ensemble de bagues limitant le glissement étant disposée sur le premier côté du packer en graphite (201) contre la première bague en forme de C et une deuxième bague limitant le glissement de l'ensemble de bagues limitant le glissement étant disposée sur le deuxième côté du packer en graphite (201) contre la deuxième bague en forme de C ; et un activateur de raccordement (330) en communication fonctionnelle avec le boîtier tubulaire (310) et servant à compresser ou décompresser le packer en graphite, le procédé comprenant les étapes consistant à :
a. manœuvrer le système de raccordement de tubulaire jusqu'à une position autour du diamètre extérieur du tubulaire, le tubulaire comprenant une plage de tolérance de diamètre extérieur positive et négative ;
b. utiliser l'activateur de raccordement pour compresser le premier raccord de pipeline, ce qui compresse le packer en graphite;
c. au cours de la compression, permettre à la première bague en forme de C et la deuxième bague en forme de C de servir de mécanisme d'extrusion primaire pour le joint en graphite en permettant à la première bague en forme de C et la deuxième bague en forme de C s'évaser avant que le joint en graphite soit compressé dans un espace entre un diamètre intérieur du joint en graphite et le diamètre extérieur du tubulaire pour rejoindre le diamètre extérieur du tubulaire et pour retenir le joint en graphite le long du diamètre extérieur du tubulaire, ce qui empêche le joint en graphite de fuir à l'extérieur;
d. utiliser la première bague en forme de C évasée et la deuxième bague en forme de C évasée pour capturer le joint en graphite pendant l'installation du premier raccord de pipeline ; et
e. utiliser les bagues limitant le glissement pour atténuer l'extrusion en empêchant la première bague en forme de C et la deuxième bague en forme de C de céder ou de s'évaser excessivement jusqu'au point où le joint en graphite n'est plus retenu.

12. Procédé destiné à assurer l'étanchéité d'un raccord de la revendication 11, dans lequel un volume de la composition à base de graphite augmente pour s'adapter à l'écrasement sur de grands espaces pendant qu'il recouvre et remplit des imperfections de surface.

13. Procédé destiné à assurer l'étanchéité d'un raccord de la revendication 11, dans lequel le tubulaire comprend un premier tubulaire et un deuxième tubulaire séparé et la manœuvre du système de raccordement tubulaire jusqu'à la position autour du tubulaire comprend la manœuvre du premier raccord de pipeline jusqu'à une position intermédiaire entre l'extrémité d'un premier tubulaire et une extrémité du deuxième tubulaire, l'extrémité du premier tubulaire et l'extrémité du deuxième tubulaire étant disposées à proximité l'une de l'autre, chacun des premier et deuxième tubulaires comprenant une plage de tolérance de diamètre extérieur positive et négative, le premier raccord de pipeline étant configuré en sus pour se verrouiller et se sceller sur les extrémités des premier et deuxième tubulaires.

14. Procédé destiné à assurer l'étanchéité d'un raccord de la revendication 11, dans lequel :
a. le tubulaire comprend un premier tubulaire et un deuxième tubulaire séparé ;
b. le système de raccordement tubulaire comprend un deuxième raccord de pipeline disposé à l'intérieur du boîtier tubulaire (310) et
c. manœuvrer le système de raccordement tubulaire jusqu'à la position autour d'un diamètre extérieur du tubulaire comprend manœuvrer le système de raccordement tubulaire de manière à ce que le premier raccord de pipeline soit dans une position proche d'une extrémité du premier tubulaire et le deuxième raccord de pipeline soit dans une position autour du deuxième tubulaire intermédiaire entre le premier raccord de pipeline et un emplacement proche d'une extrémité du deuxième tubulaire, l'extrémité du premier tubulaire et l'extrémité du deuxième tubulaire étant disposées proches l'une de l'autre, chacun du premier tubulaire et du deuxième tubulaire comprenant une plage de tolérance du diamètre extérieur positive et négative, chacun du premier raccord de pipeline et du deuxième raccord de pipeline étant configurés en sus pour se verrouiller et se sceller sur une extrémité du premier tubulaire ou du deuxième tubulaire.
